# EUROPÄISCHE PATENTSCHRIFT

(11) **EP 2 424 701 B1**
(45) Veröffentlichungstag und Bekanntmachung des Hinweises auf die Patenterteilung: **18.03.2015**
(21) Anmeldenummer: 10714574.0
(22) Anmeldetag: 30.03.2010
(51) Int. Cl.: B23D 47/12

(54) **GETRIEBE FÜR GERÄTE MIT DOPPELROTATIONSWERKZEUG**
GEARBOX FOR DEVICES HAVING DOUBLE ROTATION TOOLS
TRANSMISSION POUR APPAREILS AVEC OUTIL À DOUBLE SENS DE ROTATION

(30) Priorität: 27.04.2009 DE 202009005972 U
(43) Veröffentlichungstag der Anmeldung: 07.03.2012
(73) Patentinhaber: Elektrowerkzeuge GmbH Eibenstock, 08309 Eibenstock (DE)
(72) Erfinder: LÄSSIG, Lothar, 08324 Bockau (DE); SCHULZE, Jochen, 08309 Eibenstock (DE)
(74) Vertreter: Köhler, Tobias
(86) Internationale Anmeldenummer: PCT/EP2010/002010
(87) Internationale Veröffentlichungsnummer: WO 2010/124777

(56) Entgegenhaltungen:
- DE-U1- 29 804 002
- DATABASE WPI Week 200914 Thomson Scientific, London, GB; AN 2009-E84772 XP002590303 -& CN 201 186 366 Y 28. Januar 2009 (2009-01-28)

## Beschreibung

Die vorliegende Erfindung betrifft ein Gerät gemäß dem Oberbegriff des Anspruchs 1. Ein solches Gerät ist der CN 2011 86366 Y zu entnehmen.

Geräte mit Doppelrotationswerkzeug sind vorzugsweise als Handgerät ausgeführt. Diese Geräte sind ausgestattet mit zwei gegeneinander laufenden, gleichgroßen Sägeblättern, Schleifscheiben oder ähnlichen Werkzeugen und werden üblicherweise mittels Elektromotoren betrieben.

Die spezielle Technik zweier gegeneinander laufender Doppelrotationswerkzeuge wie Sägeblätter, Schleifscheiben oder ähnlichem bietet eine Reihe von Vorteilen.

Insbesondere soll im Weiteren eingegangen werden auf Doppelblattsägen als Untergruppe von Doppelblattwerkzeugen.

Doppelblattsägen sind vielseitig einsetzbar, da die Maschinen Holz, Kunststoff, Glas, Metall, NE- Metalle, bitumisierte Materialien oder Kombinationen daraus schneiden können.

Die durch die beiden gegenläufigen Sägeblätter entstehenden gratfreien Schnitte reduzieren die Nacharbeiten am Werkstück erheblich.

Die bei Sägen oder aber auch von Schleifmaschinen mit einem Blatt bekannten durch die Rotation der Scheiben bzw. Blätter auftretenden Probleme werden bei Einsatz von Doppelrotationswerkzeugen wie beispielsweise Sägeblättern zugunsten eines reaktionsfreien Arbeitens behoben.

Die Reaktionskräfte der Doppelrotationswerkzeuge heben sich gegenseitig auf und reduzieren das Unfallrisiko erheblich.

Vorteilhaft ist es auch, dass kalte Schnitte durchgeführt werden können, der scharfe Schnitt mit stark reduziertem Reibanteil verhindert das Ausglühen des zu trennenden Materials.

Weiterhin werden mit den Doppelrotationswerkzeug sehr hohe Trennleistungen erreicht, da das eine Werkzeug dem anderen die Späne wegräumt.

Durch die besondere Form des Getriebes laufen die Doppelrotationswerkzeuge entgegengesetzt mit gleicher Geschwindigkeit.

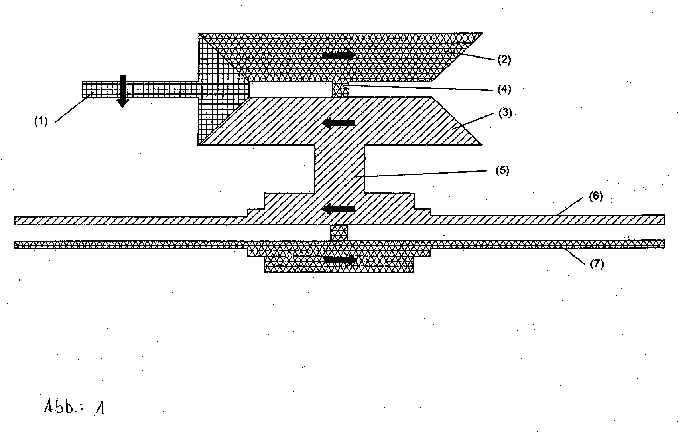

Dies wird dadurch erreicht, dass gemäß dem Stand der Technik die Antriebswelle über ein Antriebsritzel 1 eines Elektromotors die beiden Tellerräder 2 und 3 antreibt.
Dabei läuft das eine Rotationswerkzeug 7 an einer inneren Welle 4, das gegenläufige Rotationswerkzeug 6 läuft an einer hohlen Welle 5, die die innere Welle 4 umschließt. Gezeigt wird diese Lösung gemäß des Standes der Technik in Abbildung 1.

Nachteilig bei diesem Getriebe ist es, dass das für die ordnungsgemäße Funktion des Getriebes erforderliche Zahnspiel nur sehr schwer einstellbar ist.
Durch die Doppelbelastung am Antriebsritzel 1 ist eine erhöhte Beanspruchung auf dieser Ritzelseite zu erwarten, was zu erhöhtem Verschleiß führt.

Aufgabe der erfindungsgemäßen Lösung ist, ein Getriebe vorzuschlagen, welches die Nachteile des Standes der Technik behebt.

Gelöst wird diese Aufgabe durch eine Lösung gemäß des Schutzanspruches.

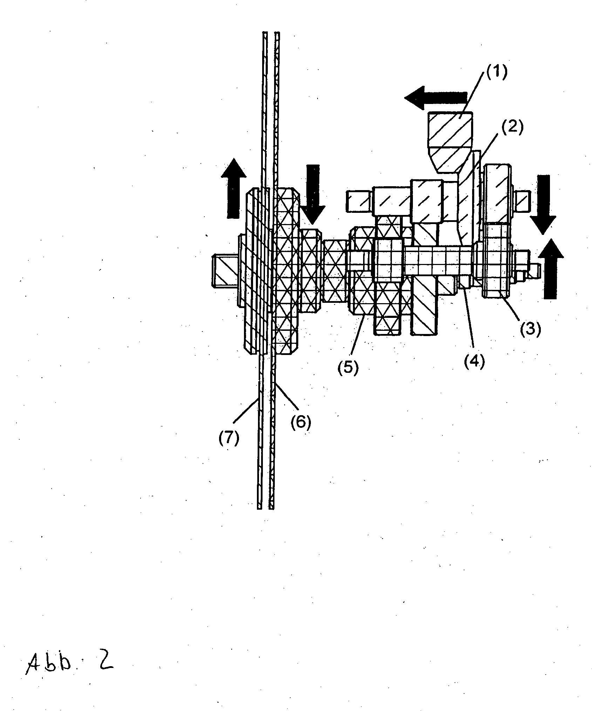

Nachfolgend soll die erfindungsgemäße Lösung anhand des Beispieles einer Doppelblattsäge und anhand der Abbildung 2 erläutert werden.

Das erfindungsgemäße Getriebe weist ein Tellerrad 2 auf, welches mit dem Antriebsritzel kämmt und somit ein Winkelgetriebe bildet. Ein weiteres auf der Welle des Tellerrades 2 angeordnetes Ritzel treibt eine zusätzliche Umkehrwelle 3 an und realisiert damit eine Drehrichtungsumkehr.
Diese in Gegenrichtung zum Tellerrad 2 drehende Umkehrwelle 3 treibt über ein weiteres Ritzel, welches auf der als Hohlwelle ausgeführten Welle 5 angeordnet ist, das Sägeblatt 6 an.
Das Sägeblatt 7 wird angetrieben mittels der Welle 4, welche wiederum angetrieben wird von der Welle des Tellerrades 2. Dabei umschließt die Hohlwelle 5, auf welcher das Sägeblatt 6 angeordnet ist, die Welle 4 des Sägeblattes 7.

In einer besonderer Ausgestaltung der erfindungsgemäßen Lösung kann das Werkzeug auch mit anderen Antrieben, wie beispielsweise Benzin- oder Hydraulikantrieb betrieben werden.

## Patentansprüche

1. Gerät mit Doppelblattwerkzeug, welches ein Getriebe aufweist mit einem Tellerrad (2), welches mit dem Antriebsritzel (1) kämmt und somit ein Winkelgetriebe bildet, wobei ein weiteres auf der Welle des Tellerrades (2) angeordnetes Ritzel so angeordnet ist, dass es eine zusätzliche Welle (3) antreibt, die über ein weiteres Ritzel, welches auf der als Hohlwelle ausgeführten Welle (5) angeordnet ist, ein gegenläufig rotierendes Rotationswerkzeug (6) antreibt und ein zweites Rotationswerkzeug (7) angetrieben ist mittels der Welle des Tellerrades (2) und dabei diese Welle (4) von der Hohlwelle (5) umschlossen ist,
**dadurch gekennzeichnet,**
**dass** die zusätzliche Welle (3) eine in Gegenrichtung zum Tellerrad (2) drehende Umkehrwelle ist womit eine Drehrichtungsumkehr realisiert wird und das zweite Rotationswerkzeug angetrieben ist mittels einer zweiten zusätzlichen Welle (4), welche angetrieben ist von der Welle des Tellerrades (2).

## Claims

1. A device with a double blade tool having a gearing including a crown wheel (2) engaging into a driving pinion (1) thusly forming an angular gear, and another pinion arranged on the shaft of the crown wheel (2) so that it drives an additional shaft (3) which by means of another pinion arranged on the shaft (5), which has a hollow design, drives a rotation tool (6) rotating in counterrotation, and a second rotation tool (7) is being driven by the shaft of the crown wheel (2), the shaft (4) herein being enclosed by the hollow shaft (5),
**characterised in that**
the additional shaft (3) is a conversion shaft rotating in counterrotation with regard to the crown wheel (2) in order to bring about the reversal of the rotation, and the second rotation tool is being driven by a second additional wheel (4) which is driven by the shaft of the crown wheel (2).

## Revendications

1. Appareil doté d'un outil à double feuille qui comprend un engrenage muni d'une couronne de différentiel (2), qui s'engrène à l'aide d'un pignon de commande (1) et qui forme donc un engrenage conique, sur lequel est agencé un autre pignon disposé sur l'arbre de la couronne de différentiel de telle sorte qu'il entraine une arbre supplémentaire (3) qui entraine à son tour un outil rotatif (6) tournant dans le sens opposé, et ce via un pignon qui est agencé sur l'arbre qui est exécuté comme arbre creux (5), et qu'un deuxième outil rotatif (7) est entrainé au moyen de l'arbre de la couronne de différentiel (2), ce même arbre (4) qui est entouré de l'arbre creux (5) **caractérisé par le fait que** l'arbre supplémentaire (3) est un arbre d'inversion tournant dans le sens opposé à la couronne de différentiel (2) et avec lequel une inversion du sens de rotation est réalisée et le deuxième outil rotatif est entrainé au moyen d'un deuxième arbre supplémentaire (4), lequel est entrainé par l'arbre de la couronne de différentiel (2).
